# EUROPÄISCHE PATENTSCHRIFT

(11) **EP 4 062 754 B1**
(45) Veröffentlichungstag und Bekanntmachung des Hinweises auf die Patenterteilung: **03.12.2025**
(21) Anmeldenummer: 21164920.7
(22) Anmeldetag: 25.03.2021
(51) Int. Cl.: A01G 31/06, B65G 59/02, B65G 65/00

(54) **BLOCKLAGERANORDNUNG**
BLOCK STORAGE ASSEMBLY
AGENCEMENT D'ENTREPOSAGE EN BLOCS

(43) Veröffentlichungstag der Anmeldung: 28.09.2022
(73) Patentinhaber: Jungheinrich Aktiengesellschaft, 22047 Hamburg (DE)
(72) Erfinder: Rollwa, Volker, 66953 Pirmasens (DE); Cavelius, Jörg, 61118 Bad Vilbel (DE); Liebhaber, Markus, 61440 Oberursel (DE)
(74) Vertreter: Keil & Schaafhausen Patentanwälte PartGmbB

(56) Entgegenhaltungen:
- CN-A- 107 041 290
- CN-U- 206 462 135
- CN-U- 210 987 541
- FR-A1- 2 354 736
- FR-A1- 2 754 803
- US-A1- 2017 150 688

## Beschreibung

Die Erfindung betrifft ein Verfahren zum Betreiben einer Blocklageranordnung mit einem Blocklager, einem Blocklagerelement und einem Fahrzeug, wobei das Blocklagerelement einen Trägerrahmen und ein Lastaufnahmeelement aufweist, wobei das Lastaufnahmeelement lösbar mit dem Trägerrahmen in Eingriff steht.

Weiterhin betrifft die Erfindung eine Blocklageranordnung mit einem Blocklager, einem Blocklagerelement und einem Fahrzeug, wobei das Blocklagerelement ein Lastaufnahmeelement und einen Trägerrahmen aufweist, wobei das Lastaufnahmeelement und der Trägerrahmen lösbar in Eingriff stehen.

Bekannte Blocklageranordnungen, wie beispielsweise aus EP 0 012 733 B1 bekannt, beschreiben Trägerrahmen, auf welchen eine Palette abgesetzt wird. Der Trägerrahmen, mit oder ohne Palette, wird entnehmbar in einem Blocklager eingelagert.

FR 2 754 803 A1 beschreibt eine Vorrichtung zum Stapeln und Entstapeln von Werkstückträgern. Diese Vorrichtung besteht aus zwei vertikalen, beweglichen Ständern, die einander gegenüberliegen, und Sprossen, die in jedem der Ständer verschiebbar angebracht sind, so dass sie im Wesentlichen vertikal verschiebbar sind, wobei zwei benachbarte Sprossen miteinander verbunden sind. Weiterhin besteht die Vorrichtung aus einem Hebesystem, das auf jeder der oberen Sprossen eines vertikalen Pfostens einwirkt, um diese Sprosse entlang des entsprechenden Pfostens zu bewegen. Die Vorrichtung weist weiterhin Mittel auf, um die vertikalen Ständer aufeinander zu oder voneinander weg zu bewegen und mindestens ein Roboter ist vorgesehen, um Teile von Ständern zu entladen oder Teile auf die Ständer zu laden.

CN 206462135 U beschreibt ein mehrschichtiges Saatbett mit einer LED-Lichtquelle. Das mehrschichtige Saatbett weist eine Saatbettrahmenstruktur, eine Saatbettschalenstruktur und eine LED-Lichtplattenstruktur auf, wobei die untere, mittlere und obere Schicht der Saatbettrahmenstruktur von unten nach oben lösbar miteinander verbunden sind, wobei die Saatbettschalenstruktur auf der Saatbettrahmenstruktur angeordnet ist.

CN 107041290 A beschreibt eine mehrschichtige Saatbettstruktur, ein Bewässerungssystem und eine LED-Lichtquelle.

CN 210987541 U beschreibt ein mobiles Gestell für Setzlinde in Hohlraumkästen.

US 2017/150688 A1 beschreibt eine Struktur für eine Pflanzschale.

FR 2 354 736 A1 beschreibt eine Vorrichtung zur Lagerung von Verpackungselementen. Die Vorrichtung umfasst eine Vielzahl von vertikal stapelbaren Trägerelementen, die zwischen benachbarten Stapeln von Verpackungselementen angeordnet sind, wobei jedes der Trägerelemente Mittel zum Einhängen an einem Verpackungselement und Führungsmittel aufweist, um das Verschieben des Verpackungselements, an dem es eingehängt ist, relativ zu diesem Trägerelement zu ermöglichen.

Ein Blocklager beschreibt eine Lageranordnung mit wenigstens einem Blocklagerelementaufnahmeraum. In dem Blocklagerelementaufnahmeraum können stapelbare Blocklagerelemente ein- und ausgelagert werden. Dazu wird wenigstens ein Blocklagerelement durch einen Beschickungsraum in den Blocklagerelementaufnahmeraum ein- oder ausgelagert. Der Beschickungsraum kann in Schwerkraftrichtung oberhalb oder unterhalb des Blocklagerelementaufnahmeraumes angeordnet sein, so dass eine Ein- oder Auslagerrichtung in oder entgegengesetzt der Schwerkraftrichtung orientiert ist. Die Ein- und Auslagerrichtung wird durch die Anordnung des Beschickungsraumes festgelegt. Ist der Beschickungsraum oberhalb des Blocklagerelementaufnahmeraums angeordnet, so ist die Einlagerrichtung entgegen der Schwerkraftrichtung und die Auslagerrichtung in der Schwerkraftrichtung orientiert. Wenn mehrere Blocklagerelemente in dem Blocklagerelementaufnahmeraum eingelagert werden, entsteht ein Blocklagerelementstapel. Weitere Bezeichnungen für das Blocklager sind Stapellager oder Behälterstapellager. In der nachfolgenden Erläuterung ist der Blocklagerelementaufnahmeraum in Schwerkraftrichtung oberhalb des Beschickungsraums angeordnet.

Es ist die Aufgabe der vorliegenden Erfindung, ein Verfahren und eine Anordnung vorzuschlagen, die eine einfache Handhabung des Blocklagerelementes ermöglichen.

Diese Aufgabe wird durch die Merkmale der Ansprüche 1 und 5 gelöst.

Bei dem Verfahren der eingangs genannten Art löst das Fahrzeug das Lastaufnahmemittel von dem Trägerrahmen und/oder bringt das Fahrzeug das Lastaufnahmeelement mit dem Trägerrahmen in Eingriff. Durch diese Anordnung wird erreicht, dass das Fahrzeug, welches das Blocklagerelement bewegt, die Aufnahme des Trennens des Lastaufnahmeelementes von dem Trägerrahmen mit übernimmt. Dadurch wird ein Umsetzen des Blocklagerelementes von dem Fahrzeug auf eine andere Vorrichtung vermieden, sodass eine gute Effizienz erreicht wird.

Weiterhin interagiert das Fahrzeug bereits mit dem Blocklagerelement, indem das Fahrzeug das Blocklagerelement in das Blocklager einlagert oder auslagert. Trennt und/oder verbindet das Fahrzeug das Lastaufnahmeelement und den Trägerrahmen, so übernimmt das Fahrzeug eine weitere Aufgabe, so dass eine Auslastung des Fahrzeuges gesteigert wird.

Vorzugsweise löst das Fahrzeug das Lastaufnahmeelement vom Trägerrahmen und übergibt das Lastaufnahmeelement an eine Fördereinrichtung, wobei der Trägerrahmen auf dem Fahrzeug verbleibt. Dadurch kann der Trägerrahmen durch das Fahrzeug beispielsweise in einen Puffer oder in das Blocklager eingelagert werden. Das Lastaufnahmeelement hingegen kann beispielsweise durch die Fördereinrichtung intralogistisch verarbeitet werden. Es ist also keine weitere Anordnung zum Umsetzen des Lastaufnahmeelementes vonnöten. Dies reduziert die Kosten und führt zu einer guten Effizienz.

Vorzugsweise bewegt und/oder reinigt die Fördereinrichtung das Lastaufnahmeelement und/oder den Trägerrahmen unabhängig voneinander. Dazu kann der Trägerrahmen beispielsweise auf die Fördereinrichtung übergeben werden. Durch die voneinander unabhängige Reinigung des Lastaufnahmeelementes und/oder des Trägerrahmens kann auf eine jeweilige Anforderungen Rücksicht genommen werden. So kann der Trägerrahmen beispielsweise eine elektronische Einrichtung aufweisen, die nicht mit Flüssigkeit mehr in Kontakt kommen darf. Demgegenüber steht beispielsweise ein Lastaufnahmeelement, das durch Chemikalien und einer entsprechenden Flüssigkeit gereinigt werden muss. Durch die Trennung der Reinigung des Lastaufnahmeelementes und von der Reinigung des Trägerrahmens wird ein reinigungsindizierter Ausfall des Lastaufnahmeelementes oder des Trägerrahmens vermieden. Dadurch wird der Wartungsaufwand geringgehalten.

Dadurch, dass der Trägerrahmen beispielsweise von dem Lastaufnahmeelement unabhängig bewegt wird, wird die Flexibilität der Blocklageranordnung weiter erhöht. So ist ein Trägerrahmen nicht an ein einzelnes Lastaufnahmeelement gebunden, sondern kann mit verschiedenen Lastaufnahmeelementen, die unterschiedlich ausgelegt sein können, interagieren. Dadurch können weiterhin verschiedenste Lagergüter in dem Blocklager gelagert werden. Das führt zu einer guten Flexibilität.

Vorzugsweise weist der Trägerrahmen eine obere Stapelgeometrie und eine untere Stapelgeometrie auf, wobei im Blocklager ein erster Trägerrahmen oberhalb eines zweiten Trägerrahmens angeordnet wird, und eine obere Stapelgeometrie des zweiten Trägerrahmens mit einer unteren Stapelgeometrie des ersten Trägerrahmens lösbar in Eingriff gebracht wird. Durch die Stapelgeometrien wird ein stabiler Blocklagerelementstapel gebildet. Der Blocklagerelementstapel weist mindestens zwei übereinander angeordnete Trägerrahmen und/oder Blocklagerelemente auf.

Weiterhin werden durch die Stapelgeometrien Lastaufnahmeelemente in einem Blocklagerelementstapel voneinander beabstandet, sodass auch empfindliche Lagergüter gelagert werden können.

Weiterhin wird die oben genannte Aufgabe durch die Merkmale des Anspruchs 5 gelöst.

Dazu sind bei einer Blocklageranordnung der eingangs genannten Art der Trägerrahmen und das Lastaufnahmeelement durch das Fahrzeug trennbar und zusammenführbar. Es kann also auf weitere Handhabungsgeräte zum Trennen und Zusammenführen vom Lastaufnahmeelement und Trägerahmen, wie beispielsweise Gabelstapler, verzichtet werden. Dies reduziert nicht nur den Einsatz weiterer Gerätschaften, sondern hält die Kosten gering.

Vorzugsweise weist das Lastaufnahmeelement einen Pflanzenaufnahmebereich auf. In dem Pflanzenaufnahmebereich können beispielsweise Setzlinge, Pflanzen, Pilze oder dergleichen angeordnet werden. Dadurch kann das Lastaufnahmeelement beispielsweise in einem als Gewächshaus ausgebildete Blocklager eingesetzt werden. Außerdem entfällt bei einem Lastaufnahmeelement mit einer Pflanzenaufnahme ein Umtopfen der Pflanzen sobald diese auslieferungsreif sind. So kann beispielsweise ein im Lastaufnahmeelement großgezogener Salat in diesem Lastaufnahmeelement in den Handel gelangen, so dass der Salat frisch und knackig beim Verbraucher ankommt. Dadurch wird nicht nur eine gute Frische der Pflanzen erreicht, sondern es werden auch Handhabungsschritte eingespart.

Vorzugsweise weist das Lastaufnahmeelement eine Flüssigkeits- und/oder Nährstoffversorgung auf. Die Flüssigkeit- und/oder Nährstoffversorgung wird auch Flüssigkeitsversorgung genannt, wobei der Begriff Flüssigkeit auch Nährstofflösungen miteinschließt. Durch die Flüssigkeitsversorgung können die Pflanzen beispielsweise mit Flüssigkeit versorgt werden, so dass die Pflanzen eine optimale Wachstumsumgebung vorfinden. Das Lastaufnahmeelement kann dadurch beispielsweise in Gewächshausanordnungen eingesetzt werden. Das ermöglicht ein breites Einsatzspektrum des Lastaufnahmeelementes.

Vorzugsweise weist der Trägerrahmen eine Beleuchtungsanordnung auf. Durch die Beleuchtungsanordnung kann ein Lastaufnahmeelement, welches beispielsweise unter der Beleuchtungsanordnung angeordnet ist, beleuchtet werden. So kann der Trägerrahmen beispielsweise in einer Gewächshausanordnung oder einem technischen Lager zum Beleuchten, Erwärmen, Warmhalten oder dergleichen eingesetzt werden. Dies führt zu einer guten Flexibilität des Trägerrahmens.

Vorzugsweise weist der Trägerrahmen wenigstens eine obere Stapelgeometrie und eine untere Stapelgeometrie auf, wobei im Blocklager ein erstes Blocklagerelement in Schwerkraftrichtung oberhalb eines zweiten Blocklagerelementes angeordnet ist, wobei eine untere Stapelgeometrie des Trägerrahmens des ersten Blocklagerelementes lösbar mit einer oberen Stapelgeometrie des Trägerrahmens des zweiten Blocklagerelements in Eingriff steht. Im Blocklager beabstanden somit die Stapelgeometrien das Lastaufnahmeelement des ersten Blocklagerelementes von dem Lastaufnahmeelement des zweiten Blocklagerelementes. Dadurch können auch druckempfindliche Lagergüter in dem Blocklager gelagert werden. Zu druckempfindlichem Lagergut zählen beispielsweise Pflanzen. Dies erweitert das Einsatzspektrum und die Lagermöglichkeiten des Blocklagers und zu einer guten Flexibilität des Blocklagers.

Erfindungsgemäß weist das Fahrzeug eine Hubvorrichtung zum Trennen und Zusammenführen des Lastaufnahmeelementes und des Trägerrahmens auf. Ist auf dem Fahrzeug beispielsweise ein Trägerrahmen mit einem Lastaufnahmeelement angeordnet, so kann das Fahrzeug durch die Hubvorrichtung das Lastaufnahmeelement von dem Trägerrahmen trennen. Dazu beabstandet das Fahrzeug das Lastaufnahmeelement von dem Trägerrahmen. Es ist also keine weitere Peripherie notwendig, die das Lastaufnahmeelement von dem Trägerrahmen trennt. Dadurch werden Kosten geringgehalten.

Die Hubvorrichtung ist eine erste Hubvorrichtung, wobei das Fahrzeug eine zweite Hubvorrichtung aufweist, die mit dem Trägerrahmen zusammenwirkt. Durch die zweite Hubvorrichtung ist es möglich, den Trägerrahmen mit oder ohne Lastaufnahmeelement beispielsweise in das Blocklager ein- und/oder auszulagern. Dadurch wird ein gutes Einsatzspektrum des Fahrzeugs erreicht.

Vorzugsweise sind das Lastaufnahmeelement und/oder der Trägerrahmen durch eine Fördereinrichtung in einer getrennten Anordnung, in der der Trägerrahmen von dem Lastaufnahmeelement getrennt ist, unabhängig voneinander bewegbar. Somit kann der Trägerrahmen mit verschiedenen Lastaufnahmeelementen in Eingriff gebracht werden. Auch kann ein Lastaufnahmeelement mit verschiedenen Trägerrahmen zusammenwirken. Dies führt zu einer guten Flexibilität von Lastaufnahmeelement und Trägerrahmen.

Vorzugsweise weist die Fördereinrichtung eine Reinigungseinrichtung auf. Die Reinigungseinrichtung kann dabei sowohl das Lastaufnahmeelement und/oder den Trägerrahmen reinigen. Dadurch werden eine gute Sauberkeit und Hygiene der Blocklageranordnung erreicht.

Die Erfindung wird im Folgenden anhand eines bevorzugten Ausführungsbeispiels in Verbindung mit der Zeichnung beschrieben. Hierin zeigen:
- Fig. 1A-1F: eine schematische Darstellung einer Übergabe eines Lastaufnahmeelementes von einem Fahrzeug auf eine Fördereinrichtung;
- Fig. 2: eine schematische Darstellung eines vom Trägerrahmen getrennten Lastaufnahmeelementes auf einem Fahrzeug;
- Fig. 3: eine schematische Darstellung eines Fahrzeugs mit einem Trägerrahmen;
- Fig. 4a-4f: eine schematische Darstellung einer Übergabe eines Trägerrahmens vom Fahrzeug auf eine Fördereinrichtung.

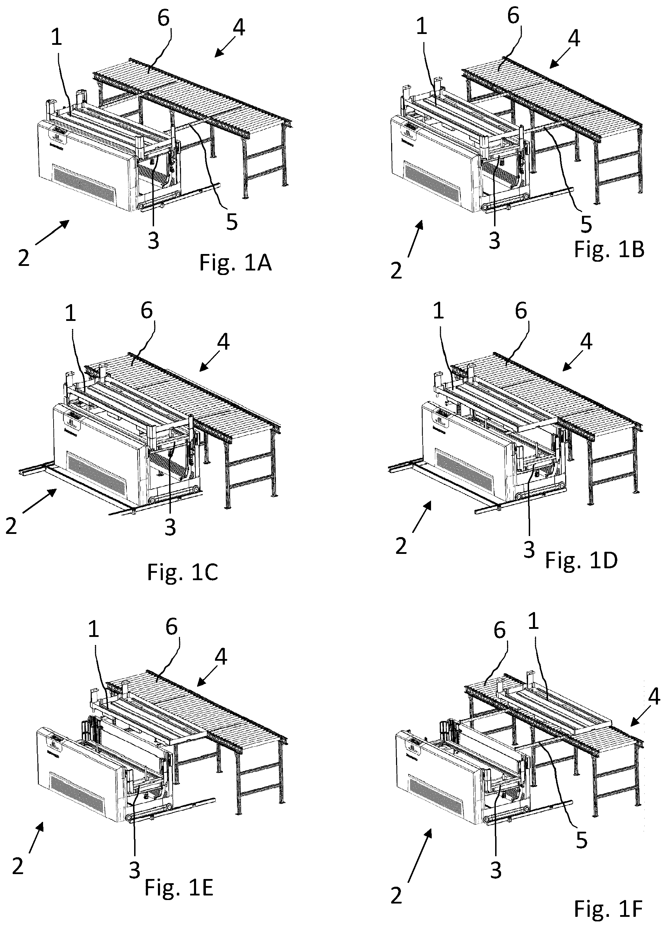

**In** Fig. 1A bis 1F ist eine Übergabe eines Lastaufnahmeelementes 1 auf eine Fördereinrichtung 4 ausgehend von einem Fahrzeug 2 mit einem Trägerrahmen 3 dargestellt. Dazu fährt das Fahrzeug 2 mit einem Blocklagerelement bestehend aus dem Trägerrahmen 3 und dem Lastaufnahmeelement 1 an die Fördereinrichtung 4 heran. Die Fördereinrichtung 4 weist einen Querförderer 5 auf, der zwei Arme aufweist, die zu einem Längsförderer 6 führen. Sowohl der Querförderer 5 als auch der Längsförderer 6 bilden einen Teil der Fördereinrichtung 4.

In Fig. 1A ist das Fahrzeug 2 samt Blocklagerelement an die Fördereinrichtung 4 herangefahren. In einem ersten Schritt zur Übergabe des Lastaufnahmeelementes 1 von dem Trägerrahmen 3 an die Fördereinrichtung 4 wird das Blocklagerelement angehoben.

In Fig. 1B ist dargestellt, dass das Lastaufnahmeelement 1 von dem Trägerrahmen 3 getrennt ist. Dazu wird das Lastaufnahmeelement 1 von einer am Fahrzeug 2 befindlichen Hubeinrichtung angehoben, um das Lastaufnahmeelement 1 von dem Trägerrahmen 3 zu trennen.

In Fig. 1C ist dargestellt, dass das Fahrzeug 2 mit vom Trägerrahmen 3 getrenntem Lastaufnahmeelement 1 verfahren ist. Dabei befindet sich der Querförderer 5 zwischen dem Lastaufnahmeelement 1 und dem Trägerrahmen 3.

In Fig. 1D ist dargestellt, das das Fahrzeug 2 den Trägerrahmen 3 absenkt, so dass das Lastaufnahmeelement 1 auf dem Querförderer 5 zurückbleibt.

Anschließend fährt das Fahrzeug 2 samt Trägerrahmen 3 unter dem Querförderer heraus, wie es in Fig. 1E dargestellt ist.

Der Querförderer 5 überführt das Lastaufnahmeelement 1 auf den Längsförderer 6 und kann nun durch die Fördereinrichtung 4 bewegt werden. Dies ist in Fig. 1F dargestellt.

Der Vorgang erfolgt in umgekehrter Reihenfolge, um ein Lastaufnahmeelement 1 auf einen Trägerrahmen 3 zu positionieren.

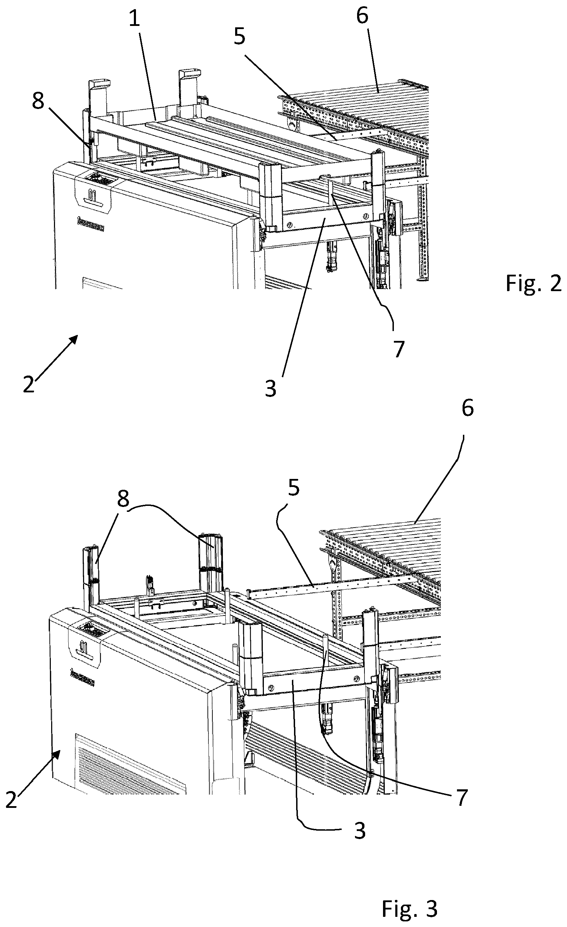

In Fig. 2 ist eine Detailaufnahme des vom Trägerrahmen 3 getrennten Lastaufnahmeelementes 1 dargestellt. Dabei wird das Lastaufnahmeelement 1 von dem Trägerrahmen 3 durch eine erste Hubeinrichtung 7 getrennt.

In Fig. 3 ist das Fahrzeug 2 mit einem Trägerrahmen 3 dargestellt, wobei die erste Hubeinrichtung 7 als pneumatischer oder hydraulischer Zylinder ausgebildet, wobei auch ein elektrischer Antrieb oder der gleichen benutzt werden kann.

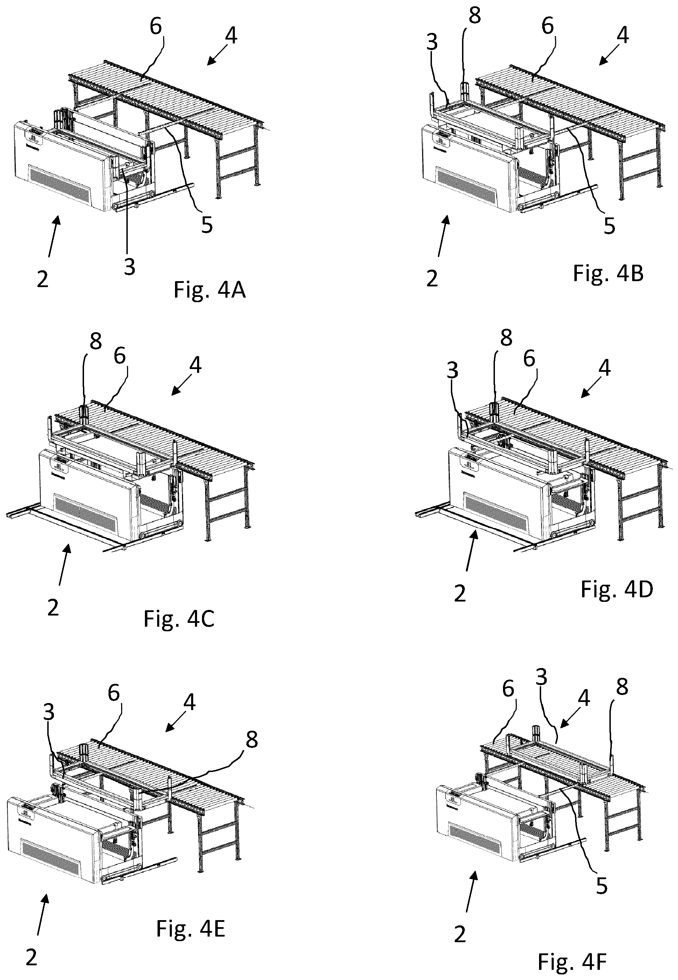

In Fig. 4A bis 4F ist ein Übergabevorgang des Trägerrahmens 3 vom Fahrzeug 2 aus auf die Fördereinrichtung 4 dargestellt.

Dazu fährt das Fahrzeug 1 an die Fördereinrichtung 4 heran, wie es in Fig. 4A dargestellt ist.

In Fig. 4B ist dargestellt, wie der Trägerrahmen 3 durch das Fahrzeug auf eine entsprechende Position gehoben wird, so dass der Querförderer 5 unterhalb des Trägerrahmens 3 Platz finden kann.

In Fig. 4C ist dargestellt, wie das Fahrzeug 1 samt angehobenem Trägerrahmen 3 an den Längsförderer 6 heranfährt, wobei der Querförderer 5 zwischen dem Trägerrahmen 3 und dem Fahrzeug 2 angeordnet ist.

Anschließend gibt das Fahrzeug 2 den Trägerrahmen 3 frei, indem das Fahrzeug 2 eine nicht dargestellte zweite Hubeinrichtung absenkt. Dabei wirkt die zweite Hubeinrichtung mit dem Trägerrahmen 3 zusammen.

In Fig. 4E ist dargestellt, wie das Fahrzeug 2 unter dem Querförderer 5 hervorfährt, wobei der Trägerrahmen 3 auf dem Querförderer 5 zurückbleibt.

In Fig. 4F ist dargestellt, wie der Trägerrahmen 3 von dem Querförderer 5 auf den Längsförderer 6 überführt wird.

Weiterhin ist in Fig. 4B bis 4F ein Trägerrahmen 3 dargestellt, der Stapelgeometrien 8 aufweist.

Im Folgenden wird beschrieben, wie der Trägerrahmen 3 ausgehend von der Fördereinrichtung 4 auf das Fahrzeug 2 übergeben wird. Dazu wird zunächst der Trägerrahmen 3 auf den Querförderer 5 überführt. Das Fahrzeug 2 fährt unter den Querförderer 5 und hebt durch die zweite Hubeinrichtung den Trägerrahmen 3 von dem Querförderer 5 an. Anschließend fährt das Fahrzeug mit dem angehobenen Trägerrahmen 3 von dem Querförderer weg, so dass der Trägerrahmen 3 durch die zweite Hubeinrichtung abgesenkt werden kann. Nun befindet sich der Trägerrahmen 3 auf dem Fahrzeug 2.

Nachdem das Fahrzeug 2 einen Trägerrahmen 3 aufgenommen hat, nimmt es nun ein Lastaufnahmeelement 1 auf. Dazu wird ein Lastaufnahmeelement 1 auf dem Querförderer 5 oder einem anderen Querförderer bereitgestellt. Das Fahrzeug 2 fährt unter den Querförderer 5, so dass es zur Aufnahme des Lastaufnahmeelementes 1 passend positioniert ist. Anschließend verfährt die zweite Hubeinrichtung den Trägerrahmen 3 so, dass der Trägerrahmen 3 unterhalb des Querförderers 5 positioniert ist und die erste Hubeinrichtung 7 mit dem Lastaufnahmeelement 1 interagieren kann. Anschließend wird die erste Hubeinrichtung 7 betätigt, um das Lastaufnahmeelement 1 von dem Querförderer 5 anzuheben. Wenn das Lastaufnahmeelement 1 von dem Querförderer 5 abgehoben wurde, bewegt sich das Fahrzeug 2 weg von dem Querförderer, und senkt anschließend das Lastaufnahmeelement 1 durch die erste Hubeinrichtung 7 auf den Trägerrahmen 3 ab. Nun bilden der Trägerrahmen 3 und das Lastaufnahmeelement 1 das Blocklagerelement. Anschließend kann das Blocklagerelement weiter abgesenkt werden.

Das Blocklagerelement kann in einem nicht dargestellten Blocklager eingelagert werden.

Sobald das Blocklagerelement wieder ausgelagert werden soll, wird es durch das Fahrzeug 2 aus dem Blocklager entnommen. Anschließend verfährt das Fahrzeug 2 zu der Fördereinrichtung 4, wo das Lastaufnahmeelement 1 von dem Trägerrahmen 3 getrennt wird.

Dazu hebt das Fahrzeug 2 den Trägerrahmen 3 samt Lastaufnahmeelement 1 durch die zweite Hubeinrichtung an. Anschließend trennt das Fahrzeug 2 das Lastaufnahmeelement 1 von dem Trägerrahmen 3 durch die erste Hubeinrichtung 7. Dadurch entsteht ein Spalt zwischen dem Trägerrahmen 3 und dem Lastaufnahmeelement 1, in den der Querförderer 5 eingeführt wird.

Dazu verfährt das Fahrzeug 2 samt angehobenem Trägerrahmen 3 und angehobenem Lastaufnahmeelement 1, so dass der Querförderer 5 zwischen dem Lastaufnahmeelement 1 und dem Trägerrahmen 3 angeordnet ist. Anschließend wird das Lastaufnahmeelement 1 auf den Querförderer 5 abgesenkt. Der Trägerrahmen 3 verbleibt auf dem Fahrzeug 2 und kann beispielsweise in das Blocklager oder einen nicht dargestellten Puffer eingelagert werden. Alternativ dazu kann der Trägerrahmen 3 auf die Fördereinrichtung 4 übergeben werden.

Um den Trägerrahmen 3 auszulagern, wird der Trägerrahmen 3 durch das Fahrzeug 2 und die zweite Hubeinrichtung angehoben, so dass der Trägerrahmen 3 in Schwerkraftrichtung oberhalb des Querförderers 5 angeordnet ist.

Anschließend verfährt das Fahrzeug 2 und senkt den Trägerrahmen 3 auf dem Querförderer 5 ab. Der Querförderer 5 übergibt den Trägerrahmen 3 an den Längsförderer 6. Von dort aus kann der Trägerrahmen durch die Fördereinrichtung 4 weiterbewegt werden.

Sowohl der Trägerrahmen 3 als auch das Lastaufnahmeelement 1 kann durch die Fördereinrichtung 4 zu einer nicht dargestellten Reinigungseinrichtung überführt werden. Die Reinigungseinrichtung kann das Lastaufnahmeelement 1 oder den Trägerrahmen 3 entsprechend ihrer jeweiligen Anforderung reinigen.

Das Lastaufnahmeelement 1 kann weiterhin einen Pflanzenaufnahmebereich aufweisen, so dass das Lastaufnahmeelement 1 in einer Gewächshausanordnung eingesetzt werden kann. Dazu weist das Lastaufnahmeelement 1 weiterhin eine Flüssigkeits- und/oder Nährstoffversorgung auf. Durch die Flüssigkeits- und/oder Nährstoffversorgung kann das Lastaufnahmeelement 1 und darin befindliche Pflanzen mit Flüssigkeit versorgt werden.

Weiterhin kann der Trägerrahmen 3 eine Beleuchtung aufweisen, die wenn der Trägerrahmen 3 im Blocklager eingelagert ist, nach unten strahlt. In dem Blocklager sind die Stapelgeometrien 8 benachbarter Trägerrahmen 3 und/oder. Blocklagerelemente in lösbaren Eingriff, wobei die Trägerrahmen 3 und/oder Blocklagerelemente einen Behälterstapel bilden.

Ist beispielsweise ein erster Trägerrahmen 3 oberhalb eines zweiten Trägerrahmens 3 angeordnet, so beleuchtet die Beleuchtungsanordnung des ersten Trägerrahmens 3 den zweiten Trägerrahmen 3. Ist nun ein Lastaufnahmeelement 1 auf dem zweiten Trägerrahmen 3 angeordnet, so wird das Lastaufnahmeelement 1 durch die Beleuchtungsanordnung des ersten Trägerrahmens 3 beleuchtet.

Dadurch können in der Blocklageranordnung Pflanzen in jeglichen Wachstumsstadien aufgezogen werden. Der Vorteil dabei ist, dass das Lastaufnahmeelement 1 mit neuen Setzlingen oder Samen bestückt werden kann, wobei das Lastaufnahmeelement gleichzeitig auch als Transportmöglichkeit für den Verkauf der großgezogenen Pflanzen dient. Es entfällt also ein Umpflanzen bzw. Ernten der Pflanzen vor Ort, so dass die Pflanzen keiner weiteren Belastung ausgesetzt sind und somit bis zum Endverbraucher frisch gehalten werden können.

Außerdem kann in einem pflanzenbezogenen Anwendungsfall der Trägerrahmen 3 unabhängig von dem Lastaufnahmeelement 1 gereinigt werden, so dass sowohl auf pflanzliche Bedürfnisse als auch auf die Anforderungen des Trägerrahmens 3, insbesondere der Elektronik, Rücksicht genommen werden kann. Dadurch wird einerseits die Wartungsfreundlichkeit erhöht und andererseits die Lebensdauer des Lastaufnahmeelements 1 und des Trägerrahmens 3 verbessert.

### Bezugszeichenliste

- 1: Lastaufnahmeelement
- 2: Fahrzeug
- 3: Trägerrahmen
- 4: Fördereinrichtung
- 5: Querförderer
- 6: Längsförderer
- 7: erste Hubeinrichtung
- 8: Stapelgeometrien

## Patentansprüche

1. Verfahren zum Betreiben einer Blocklageranordnung mit einem Blocklager, einem Blocklagerelement und einem Fahrzeug (2), wobei das Blocklagerelement einen Trägerrahmen (3) und ein Lastaufnahmeelement (1) aufweist, wobei das Lastaufnahmeelement (1) lösbar mit dem Trägerrahmen (3) in Eingriff steht, **dadurch gekennzeichnet, dass** das Fahrzeug (2) eine Hubvorrichtung aufweist, die das Lastaufnahmeelement (1) von dem Trägerrahmen (3) löst, und/oder dass durch die Hubvorrichtung des Fahrzeugs (2) das Lastaufnahmeelement (1) mit dem Trägerrahmen (3) in Eingriff bringt.

2. Verfahren nach Anspruch 1, **dadurch gekennzeichnet, dass** das Fahrzeug (2) das Lastaufnahmeelement (1) vom Trägerrahmen (3) löst und das Lastaufnahmeelement (1) an eine Fördereinrichtung (4) übergibt und der Trägerrahmen (3) auf dem Fahrzeug (2) verbleibt.

3. Verfahren nach Anspruch 1 oder 2, **dadurch gekennzeichnet, dass** die Fördereinrichtung (4) das Lastaufnahmeelement (1) und/oder den Trägerrahmen (3) unabhängig voneinander bewegt und/oder reinigt.

4. Verfahren nach einem der Ansprüche 1 bis 3, **dadurch gekennzeichnet, dass** der Trägerrahmen (3) eine obere Stapelgeometrie (8) und eine untere Stapelgeometrie (8) aufweist, wobei im Blocklager ein erster Trägerrahmen (3) oberhalb eines zweiten Trägerrahmens (3) angeordnet wird, und eine obere Stapelgeometrie (8) des zweiten Trägerrahmens (3) mit einer unteren Stapelgeometrie (8) des ersten Trägerrahmens (3) in lösbaren Eingriff gebracht wird.

5. Blocklageranordnung mit einem Blocklager, einem Blocklagerelement und einem Fahrzeug (2), wobei das Blocklagerelement ein Lastaufnahmeelement (1) und einen Trägerrahmen (3) aufweist, wobei das Lastaufnahmeelement (1) und der Trägerrahmen (3) lösbar in Eingriff stehen, **dadurch gekennzeichnet, dass** der Trägerrahmen (3) und das Lastaufnahmeelement (1) durch das Fahrzeug (2) trennbar und zusammenführbar sind, wobei das Fahrzeug (2) eine Hubvorrichtung zum Trennen und Zusammenführen des Lastaufnahmeelements (1) und des Trägerrahmens (3) aufweist.

6. Blocklageranordnung nach Anspruch 5, **dadurch gekennzeichnet, dass** das Lastaufnahmeelement (1) einen Pflanzenaufnahmebereich aufweist.

7. Blocklageranordnung nach Anspruch 5 oder 6, **dadurch gekennzeichnet, dass** das Lastaufnahmeelement (1) eine Flüssigkeits- und/oder Nährstoffversorgung aufweist.

8. Blocklageranordnung nach einem der Ansprüche 5 bis 7, **dadurch gekennzeichnet, dass** der Trägerrahmen (3) eine Beleuchtungsanordnung aufweist.

9. Blocklageranordnung nach einem der Ansprüche 5 bis 8, **dadurch gekennzeichnet, dass** der Trägerrahmen (3) wenigstens eine obere Stapelgeometrie (8) und eine untere Stapelgeometrie (8) aufweist, und dass im Blocklager ein erstes Blocklagerelement in Schwerkraftrichtung oberhalb eines zweiten Blocklagerelementes angeordnet, wobei eine untere Stapelgeometrie (8) des Trägerrahmen (3) des ersten Blocklagerelements lösbar mit einer oberen Stapelgeometrie (8) des Trägerrahmens (3) des zweiten Blocklagerelementes in Eingriff steht.

10. Blocklageranordnung nach einem der Ansprüche 5 bis 9, **dadurch gekennzeichnet, dass** die Hubvorrichtung eine erste Hubvorrichtung ist, und dass das Fahrzeug (2) eine zweite Hubvorrichtung aufweist, die mit dem Trägerrahmen (3) zusammenwirkt.

11. Blocklageranordnung nach einem der Ansprüche 5 bis 10, **dadurch gekennzeichnet, dass** das Lastaufnahmeelement (1) und/oder der Trägerrahmen (3) durch eine Fördereinrichtung (4) in einer getrennten Anordnung, in der der Trägerrahmen (3) vom Lastaufnahmeelement (1) getrennt ist, unabhängig voneinander bewegbar sind.

12. Blocklageranordnung nach einem der Ansprüche 5 bis 11, **dadurch gekennzeichnet, dass** die Fördereinrichtung (4) eine Reinigungseinrichtung aufweist.

## Claims

1. Method for operating a block storage assembly with a block storage, a block storage element and a vehicle (2), wherein the block storage element has a support frame (3) and a load-bearing element (1), wherein the load-bearing element (1) is detachably engaged with the support frame (3), **characterized in that** the vehicle (2) has a lifting device which detaches the load-bearing element (1) from the support frame (3), and/or **in that** the lifting device of the vehicle (2) engages the load-bearing element (1) with the support frame (3).

2. Method according to claim 1, **characterized in that** the vehicle (2) detaches the load-bearing element (1) from the support frame (3) and transfers the load-bearing element (1) to a conveyor device (4), and the support frame (3) remains on the vehicle (2).

3. Method according to claim 1 or 2, **characterized in that** the conveyor device (4) moves and/or cleans the load-bearing element (1) and/or the support frame (3) independently of each other.

4. Method according to one of claims 1 to 3, **characterized in that** the carrier frame (3) has an upper stacking geometry (8) and a lower stacking geometry (8), wherein in the block storage a first carrier frame (3) is arranged above a second carrier frame (3), and an upper stacking geometry (8) of the second support frame (3) is brought into releasable engagement with a lower stacking geometry (8) of the first support frame (3).

5. Block storage assembly with a block storage unit, a block storage element and a vehicle (2), wherein the block storage element has a load-bearing element (1) and a support frame (3), wherein the load-bearing element (1) and the support frame (3) are detachably engaged, **characterized in that** the support frame (3) and the load-bearing element (1) can be separated and joined together by the vehicle (2), wherein the vehicle (2) has a lifting device for separating and joining the load-bearing element (1) and the support frame (3).

6. Block storage assembly according to claim 5, **characterized in that** the load-bearing element (1) has a plant receiving area.

7. Block storage assembly according to claim 5 or 6, **characterized in that** the load-bearing element (1) has a liquid and/or nutrient supply.

8. Block storage assembly according to one of claims 5 to 7, **characterized in that** the support frame (3) has a lighting assembly.

9. Block storage assembly according to one of claims 5 to 8, **characterized in that** the support frame (3) has at least one upper stacking geometry (8) and one lower stacking geometry (8), and that in the block storage system a first block storage element is arranged above a second block storage element in the direction of gravity, wherein a lower stacking geometry (8) of the support frame (3) of the first block storage element is detachably engaged with an upper stacking geometry (8) of the support frame (3) of the second block storage element.

10. Block storage assembly according to one of claims 5 to 9, **characterized in that** the lifting device is a first lifting device, and that the vehicle (2) has a second lifting device which interacts with the support frame (3).

11. Block storage assembly according to one of claims 5 to 10, **characterized in that** the load-bearing element (1) and/or the support frame (3) can be moved independently of each other by a conveyor device (4) in a separate assembly in which the support frame (3) is separated from the load-bearing element (1).

12. Block storage assembly according to one of claims 5 to 11, **characterized in that** the conveyor device (4) has a cleaning device.

## Revendications

1. Procédé de fonctionnement d'un système d'entreposage en blocs, avec un entreposage en blocs, un élément d'entreposage en blocs et un véhicule (2), sachant que l'élément d'entreposage en blocs comporte un cadre de support (3) et un élément de réception de charge (1), sachant que l'élément de réception de charge (1) est en prise de façon amovible avec le cadre de support (3), **caractérisé en ce que** le véhicule (2) comporte un dispositif de levage, qui libère l'élément de réception de charge (1) du cadre de support (3) et/ou met en prise l'élément de réception de charge (1) avec le cadre de support (3) par le dispositif de levage du véhicule (2) .

2. Procédé selon la revendication 1, **caractérisé en ce que** le véhicule (2) libère l'élément de réception de charge (1) du cadre de support (3) et transfère l'élément de réception de charge (1) à un dispositif de transport (4) et le cadre de support (3) reste sur le véhicule (2) .

3. Procédé selon la revendication 1 ou 2, **caractérisé en ce que** le dispositif de transport (4) déplace et/ou nettoie l'élément de réception de charge (1) et/ou le cadre de support (3) indépendamment l'un de l'autre.

4. Procédé selon l'une quelconque des revendications 1 à 3, **caractérisé en ce que** le cadre de support (3) comporte une géométrie d'empilage supérieure (8) et une géométrie d'empilage inférieure (8), sachant que dans l'entreposage en blocs est disposé un premier cadre de support (3) au-dessus d'un deuxième cadre de support (3) et une géométrie d'empilage supérieure (8) du deuxième cadre de support (3) est mis en prise de façon amovible avec une géométrie d'empilage inférieure (8) du premier cadre de support (3).

5. Système d'entreposage en blocs avec un entreposage en blocs, un élément d'entreposage en blocs et un véhicule (2), sachant que l'élément d'entreposage en blocs comporte un élément de réception de charge (1) et un cadre de support (3), sachant que l'élément de réception de charge (1) et le cadre de support (3) se trouvent en prise de façon amovible, **caractérisé en ce que** le cadre de support (3) et l'élément de réception de charge (1) peuvent être séparés et réunis par le véhicule (2), sachant que le véhicule (2) comporte un dispositif de levage pour séparer et réunir l'élément de réception de charge (1) et le cadre de support (3).

6. Système d'entreposage en blocs selon la revendication 5, **caractérisé en ce que** l'élément de réception de charge (1) comporte une zone de réception de plants.

7. Système d'entreposage en blocs selon la revendication 5 ou 6, **caractérisé en ce que** l'élément de réception de charge (1) comporte une alimentation en liquide et/ou en nutriments.

8. Système d'entreposage en blocs selon l'une quelconque des revendications 5 à 7, **caractérisé en ce que** le cadre de support (3) comporte un système d'éclairage.

9. Système d'entreposage en blocs selon l'une quelconque des revendications 5 à 8, **caractérisé en ce que** le cadre de support (3) comporte au moins une géométrie d'empilage supérieure (8) et une géométrie d'empilage inférieure (8) et **en ce que** dans l'entreposage en blocs est disposé un premier élément d'entreposage en blocs en direction de la gravité au-dessus d'un deuxième élément d'entreposage en blocs, sachant qu'une géométrie d'empilage inférieure (8) du cadre de support (3) du premier élément d'entreposage en blocs se trouve en prise de façon amovible avec une géométrie d'empilage supérieure (8) du cadre de support (3) du deuxième élément d'entreposage en blocs.

10. Système d'entreposage en blocs selon l'une quelconque des revendications 5 à 9, **caractérisé en ce que** le dispositif de levage est un premier dispositif de levage et **en ce que** le véhicule (2) comporte un deuxième dispositif de levage qui coopère avec le cadre de support (3).

11. Système d'entreposage en blocs selon l'une quelconque des revendications 5 à 10, **caractérisé en ce que** l'élément de réception de charge (1) et/ou le cadre de support (3) peuvent être mobiles indépendamment l'un de l'autre par un dispositif de transport (4) dans un agencement séparé dans lequel le cadre de support (3) est séparé de l'élément de réception de charge (1).

12. Système d'entreposage en blocs selon l'une quelconque des revendications 5 à 11, **caractérisé en ce que** le dispositif de transport (4) comporte un dispositif de nettoyage.
